# EUROPÄISCHE PATENTSCHRIFT

(11) **EP 4 070 062 B1**
(45) Veröffentlichungstag und Bekanntmachung des Hinweises auf die Patenterteilung: **01.01.2025**
(21) Anmeldenummer: 20811583.2
(22) Anmeldetag: 20.11.2020
(51) Int. Cl.: G01L 13/02, G01L 19/06, G01L 9/00

(54) **RELATIVDRUCKSENSOR MIT TROCKNUNGSKAMMER**
RELATIVE-PRESSURE SENSOR COMPRISING A DRYING CHAMBER
CAPTEUR DE PRESSION RELATIVE COMPRENANT UNE CHAMBRE DE SÉCHAGE

(30) Priorität: 02.12.2019 DE 102019132723
(43) Veröffentlichungstag der Anmeldung: 12.10.2022
(73) Patentinhaber: Endress+Hauser SE+Co. KG, 79689 Maulburg (DE)
(72) Erfinder: HÜGEL, Michael, 79541 Lörrach (DE); VOLZ, Frank, 79104 Freiburg (DE); PONATH, Nils, 79539 Lörrach (DE); RUPP, Armin, 79576 Weil am Rhein (DE)
(74) Vertreter: Koslowski, Christine Adelheid
(86) Internationale Anmeldenummer: PCT/EP2020/082845
(87) Internationale Veröffentlichungsnummer: WO 2021/110429

(56) Entgegenhaltungen:
- EP-A1- 1 070 948
- DE-A1- 102010 003 709

## Beschreibung

Die vorliegende Erfindung betrifft einen Relativdrucksensor zur Bestimmung eines Drucks eines Mediums in Bezug auf einen Atmosphärendruck, mit einem Gehäuse, mit einem Messelement, welches in dem Gehäuse angeordnet ist, wobei eine mit dem Medium in Kontakt stehende Außenfläche des Messelements mit dem zu messenden Druck beaufschlagt ist, mit einer Referenzdruckzuführung, welche einer Innenfläche des Messelements den Atmosphärendruck in Form von Umgebungsluft zuführt, mit einer Auswerteeinheit, welche aus einer mit dem Messelement bestimmten Größe den Druck des Mediums bestimmt, und mit mindestens einer in dem Gehäuse angeordneten Trocknungskammer zur Aufnahme von Luftfeuchte aus der durch die Referenzdruckzuführung zugeführten Umgebungsluft. Das Medium, dessen Druck zu bestimmen ist, ist hierbei flüssig oder gasförmig.

In der Druckmesstechnik sind Absolutdruck-, Differenzdruck- und Relativdrucksensoren bekannt. Absolutdrucksensoren bestimmen den vorherrschenden Druck absolut, d. h. in Bezug auf Vakuum, während Differenzdrucksensoren die Differenz zwischen zwei unterschiedlichen Drücken bestimmen. Bei Relativdrucksensoren wird der zu messende Druck gegenüber einem Referenzdruck bestimmt, wobei der in der Umgebung des Relativdrucksensors vorherrschende Atmosphärendruck als Referenzdruck dient. Relativdrucksensoren weisen ein druckempfindliches Messelement auf, in der Regel eine Membran, welche im Innenraum des Relativdrucksensors prozessseitig angeordnet ist, so dass auf die Außenfläche des Messelements der zu messende Druck des Mediums einwirkt. Auf die Innenfläche des Messelements wirkt der Atmosphärendruck ein, welcher dem Messelement mittels einer Referenzdruckzuführung aus der Umgebung zugeführt wird. Das Messelement verbiegt sich in Abhängigkeit des vorliegenden Relativdrucks, welcher aus der Differenz zwischen dem zu messenden Druck und dem Atmosphärendruck gebildet wird. Diese Verbiegung wird mittels einer Auswerteinheit in ein vom Relativdruck abhängiges elektrisches Signal umgewandelt, das dann zur weiteren Verarbeitung oder Auswertung zur Verfügung steht. Eine Vielzahl solcher Relativdrucksensoren wird von Firmen der Endress + Hauser-Gruppe hergestellt und vertrieben.

Der Relativdrucksensor kann den zu messenden Druck nach verschiedenen Verfahren, beispielsweise kapazitiv oder piezoresistiv, bestimmen.

In einem kapazitiven Relativdrucksensor wird eine Membran mit einer ersten Elektrode und die der Membran gegenüberliegenden Seite einer Messkammer mit einer zweiten und teilweise mit einer dritten Elektrode versehen. Die zweite Elektrode bildet mit der ersten Elektrode einen Messkondensator, der für Verbiegungen der Membran besonders empfindlich ist, sodass aus dem Wert der Kapazität der Relativdruck bestimmbar ist. Die dritte Elektrode dient als Referenzelektrode und bildet mit der ersten Elektrode einen Referenzkondensator, der im Wesentlichen druckunabhängig ist und von Temperatur, Luftfeuchtigkeit und anderen Umgebungsparametern beeinflusst wird. Mittels der Kapazität des Referenzkondensators können so Störsignale, wie temperaturabhängige Kapazitätsänderungen, kompensiert werden.

Eine weitere Gruppe von bekannten Relativsensoren weist eine Membran auf, an welcher dehnungssensitive Elemente wie Dehnungsstreifen angeordnet sind. Die Dehnungsstreifen sind dabei häufig in Form einer Wheatstone'schen Messbrücke angeordnet. Der Widerstand der Dehnungsstreifen ist von der Verbiegung der Membran abhängig und wird zur Bestimmung des angelegten Drucks ausgewertet.

Piezoresistive Relativsensoren weisen eine sensitive Schicht auf, deren elektrische Eigenschaften vom angelegten Druck abhängen. Diese Schicht ist nicht direkt mit dem zu messenden Druck beaufschlagt, sondern steht über einen Druckmittler mit dem Medium in Kontakt. Der Druckmittler kann ein massiver Festkörper sein oder ein mit einer inkompressiblen Flüssigkeit, z. B. Öl, befülltes Rohr, welches durch eine drucksensitive Membran gegenüber dem Prozess abgedichtet ist.

Häufig werden Relativdrucksensoren in industriellen Prozessen eingesetzt, in denen sie hohen Temperaturschwankungen und -differenzen zwischen Prozess und Umgebung ausgesetzt sind. Bei plötzlicher Abkühlung kann der Taupunkt der Luft in einem Innenraum des Relativdrucksensors überschritten werden, was zur Kondensation der Luftfeuchtigkeit auf kalten Teilen innerhalb des Relativdrucksensors führt. Die Luftfeuchtigkeit kann insbesondere durch die Öffnung des Relativdrucksensors zur Umgebung, welche zum Bereitstellen des Referenzdrucks für das Messelement notwendig ist, und durch die Referenzdruckzuführung in den Relativdrucksensor gelangen.

Die Auswerteeinheit ist in der Regel sehr empfindlich gegenüber Feuchtigkeit. Für eine zuverlässige Bestimmung des Drucks muss folglich sichergestellt sein, dass innerhalb des Relativdrucksensors keine oder nur wenig Feuchtigkeit eintritt oder kondensiert. Im Idealfall ist der Relativdrucksensor so aufgebaut, dass lediglich trockene Luft zum Messelement und zur Auswerteeinheit gelangt. In der Regel führt die Referenzdruckzuführung den Umgebungsdruck von einer Öffnung im Relativdrucksensor, welche häufig im Gehäuse des Relativdrucksensors angeordnet ist, zu der Innenfläche des Messelements bzw. der Membran. Häufig ist die Referenzdruckzuführung zwischen der Öffnung des Relativdrucksensors und einem Innenraum des Relativdrucksensors als langer, mitunter gewundener Pfad ausgestaltet, um die Diffusion von Feuchtigkeit in den Innenraum des Relativdrucksensors zu reduzieren. Zusätzlich ist teilweise zwischen der Öffnung des Relativdrucksensors und dem Messelement eine Trocknungskammer angeordnet, die der zugeführten Umgebungsluft aus der Referenzdruckzuführung Feuchtigkeit entzieht und diese so trocknet.

Aus dem Stand der Technik sind verschiedene Trocknungskammern bekannt geworden.

In der DE 10 2014 108 780 A1 wird ein Trockenmodul für einen Relativdruckaufnehmer beschrieben. Das Trockenmodul umfasst ein Modulgehäuse, welches einen Innenraum mit einem Trocknungsmittel und einer Referenzdruckzuführung aufweist, welche von einer der Umgebung zugewandten Öffnung des Modulgehäuses durch das Modulgehäuse hindurch zu einer Öffnung des Relativdruckaufnehmers verläuft. Die Referenzdruckzuführung ist innerhalb des Modulgehäuses als Kapillare ausgebildet, welche entweder teilweise feuchtedurchlässig ist oder eine Öffnung entlang der Kapillare zum Austausch der Luft bzw. der Feuchtigkeit mit dem Trocknungsmittel besitzt. Das Trockenmodul wird mittels eines Anschlusselements an der Öffnung des Relativdruckaufnehmers befestigt. Hierbei ist es essentiell, dass das Anschlusselement so an der Öffnung des Relativdruckaufnehmers befestigt ist, dass die Umgebungsluft nur durch die Referenzdruckzuführung in den Relativdruckaufnehmer geführt wird und somit ausschließlich getrocknete Umgebungsluft in den Relativdruckaufnehmer eintritt. Es soll vermieden werden, dass feuchte Umgebungsluft direkt, ohne den Umweg durch das Trockenmodul, in den Relativdruckaufnehmer gelangt. Da das Trockenmodul austauschbar ausgestaltet ist und die Verbindung zum Relativdruckaufnehmer folglich lösbar sein muss, ist es nicht einfach sicherzustellen, dass nur im Trockenmodul getrocknete Umgebungsluft in den Relativdruckaufnehmer geführt wird. Gleichzeitig weist das Trockenmodul eine begrenzte Lebensdauer auf, da das Trocknungsmittel über eine kurze Referenzdruckzuführung mit der Umgebungsluft in Verbindung steht und somit zügig Feuchtigkeit aufnehmen kann.

Die DE 10 2010 003 709 A1 beschreibt einen Relativdrucksensor mit einem Gehäuse, einem Messelement, einer Auswerteeinheit, einer Referenzdruckzuführung und einer Trocknungskammer, welche in dem Gehäuse angeordnet ist und ein feuchteadsorbierendes Material enthält oder im Wesentlichen aus dem feuchteadsorbierenden Material besteht. Das feuchteadsorbierende Material kann als Form-, Sinter- oder Kompositkörper ausgestaltet sein. Die Referenzdruckzuführung ist zwischen einer Öffnung des Gehäuses des Relativdrucksensors und der Trocknungskammer als lange Kapillare ausgebildet, um die Diffusion von Feuchtigkeit in einen Innenraum des Relativdrucksensors zu reduzieren. Die Referenzdruckzuführung liegt weiterhin mit einem Abschnitt innerhalb der Trocknungskammer und besteht in diesem Abschnitt aus einem feuchtedurchlässigen Material, so dass die Trocknungskammer Feuchtigkeit aus der Umgebungsluft innerhalb der Referenzdruckzuführung aufnehmen kann. Der feuchtedurchlässige Abschnitt der Referenzdruckzuführung, der typischerweise ein Schlauch ist, muss am Messelement befestigt werden. Da der Schlauch idealerweise einen sehr kleinen Innendurchmesser aufweist, um möglichst wenig Feuchtigkeit durch den Schlauch diffundieren zu lassen, ist das Befestigen des Schlauchs am Messelement mitunter sehr aufwändig. Zusätzlich ist eine Verschlussfläche auf der dem Messelement abgewandten Seite der Trocknungskammer nötig. Der Schlauch ist in die Verschlussfläche derartig eingebracht, dass die Referenzdruckzufuhr in die Trocknungskammer ausschließlich durch den Schlauch verläuft. Die Verschlussfläche kann eine Glasdurchführung sein, welche in einem zusätzlichen Prozessschritt in den Relativdrucksensor angebracht wird.

Ausgehend vom genannten Stand der Technik liegt der vorliegenden Erfindung die Aufgabe zugrunde, ein Trockenmodul bereitzustellen, welches auf einfache Weise in den Relativdrucksensor eingebracht werden kann, derart dass nur getrocknete Luft an das Messelement und die Auswerteeinheit gelangt.

Die Aufgabe wird erfindungsgemäß gelöst durch einen Relativdrucksensor zur Bestimmung eines Drucks p1 eines Mediums in Bezug auf einen Atmosphärendruck p2,
mit einem Gehäuse,
mit einem Messelement, welches in dem Gehäuse angeordnet ist, wobei eine mit dem Medium in Kontakt stehende Außenfläche des Messelements mit dem zu messenden Druck p1 beaufschlagt ist,
mit einer Referenzdruckzuführung, welche einer Innenfläche des Messelements den Atmosphärendruck p2 in Form von Umgebungsluft zuführt, mit einer Auswerteeinheit, welche aus einer mit dem Messelement bestimmten Größe den Druck p1 des Mediums bestimmt,
und mit mindestens einer in dem Gehäuse angeordneten Trocknungskammer zur Aufnahme von Luftfeuchte aus der durch die Referenzdruckzuführung zugeführten Umgebungsluft.

Dabei weist die Trocknungskammer ein Trockenmodul auf, welches einen Behälter und ein vom Behälter vollständig umschlossenes feuchteadsorbierendes Material umfasst, wobei eine dem Messelement zugewandte Bodenfläche des Behälters zumindest teilweise feuchtedurchlässig ausgestaltet ist, wobei der Behälter mit Ausnahme der Bodenfläche feuchteundurchlässig ausgestaltet ist. Die Auswerteeinheit ist in der Nähe des Messelements oder zumindest zwischen der Bodenfläche des Behälters und dem Messelement angeordnet.

Die Nutzung des Behälters zum Einschluss des feuchteadsorbierenden Materials sorgt für eine zusätzliche Stabilisierung des feuchteadsorbierenden Materials. Beispielsweise kann das feuchteabsorbierende Material in Pulverform in den Behälter gefüllt werden. Wenn ein Formkörper als feuchteadsorbierendes Material eingesetzt wird und dieser bei Erreichen der Sättigung mit Feuchtigkeit seine Form verliert, also beispielsweise Risse bekommt oder in mehrere Teile zerfällt, sorgt der Behälter dafür, dass das feuchteadsorbierende Material sich nicht im Innenraum des Relativdrucksensors verteilen kann.

Die Ausgestaltung der Bodenfläche als zumindest teilweise feuchtedurchlässig ist besonders vorteilhaft, da die Auswerteeinheit in der Nähe des Messelements oder zumindest zwischen der Bodenfläche und dem Messelement angeordnet ist. So sorgt das Trockenmodul für eine effektive Trocknung der Luft in der Nähe der Auswerteeinheit.

Da nur die Bodenfläche teilweise feuchtedurchlässig ausgestaltet ist, diffundiert die Feuchtigkeit aus der Referenzdruckzuführung nur langsam in den Behälter und zum feuchteadsorbierenden Material. Folglich wird durch die Aufnahme des feuchteabsorbierenden Materials in den Behälter die Geschwindigkeit der Feuchtigkeitsaufnahme durch das feuchteadsorbierende Material deutlich reduziert. Das bedeutet auch, dass das feuchteadsorbierende Material weniger schnell mit Feuchtigkeit gesättigt wird.

Die langsamere Sättigung des feuchteadsorbierenden Materials erleichtert sowohl die Lagerung des Trockenmoduls als auch die Montage des Trockenmoduls im Relativdrucksensor. Ein feuchteadsorbierendes Material, welches nicht von dem Behälter umgeben ist, wird sehr schnell Feuchtigkeit aufnehmen, sobald es der Umgebungsluft ausgesetzt ist. Dies ist bei der Montage des feuchteadsorbierenden Materials ein großer Nachteil, da die Montage bei Umgebungsbedingungen stattfindet und das feuchteadsorbierende Material während der Montage bereits einen nicht geringen Grad an Feuchtigkeit aufnimmt. In der erfindungsgemäßen Lösung wird dieses Problem jedoch durch den Einsatz des nur teilweise feuchtedurchlässigen Behälters, in welchen das feuchteadsorbierende Material aufgenommen ist, deutlich verringert, da das Trockenmodul wesentlich langsamer Feuchtigkeit aus der Umgebung aufnehmen kann. Gleichzeitig führt das zu einer leichteren Lagerung des Trockenmoduls, da es durch die langsamere Sättigung des Trockenmoduls länger lagerbar ist.

Durch die Begrenzung der Feuchteaufnahme in das Trockenmodul zieht das feuchteadsorbierende Material weniger Feuchtigkeit aus der Umgebung an. Typischerweise wird in Relativdrucksensoren ein Schlauch durch die Trocknungskammer geführt und die Trocknungskammer auf ihrer dem Messelement abgewandten Seite mit einer Glasdurchführung abgeschlossen, durch welche der Schlauch geführt wird. Die Kombination aus einem Schlauch mit möglichst kleinem Innendurchmesser und Glasdurchführung ist für gewöhnlich nötig, damit die Umgebungsluft und damit die Feuchtigkeit nur langsam in die Trocknungskammer diffundiert. Ohne den Einsatz von einem Schlauch und einer Glasdurchführung würde eine Trocknungskammer entsprechend der bisherigen Veröffentlichungen permanent der Umgebungsluft innerhalb des Relativdrucksensors Feuchtigkeit entziehen, was dazu führen würde, dass die Diffusion der Feuchtigkeit aus der Umgebung des Relativrucksensors in den Innenraum des Relativdrucksensor beschleunigt würde. Dies würde zu einer schnellen Sättigung des feuchteadsorbierenden Materials in der Trocknungskammer führen. In der erfindungsgemäßen Lösung hingegen wird durch die Aufnahme des feuchteadsorbierenden Materials in den nur teilweise feuchtedurchlässigen Behälter die Anziehung von Feuchtigkeit aus dem Innenraum des Relativdrucksensor deutlich verringert. Damit sind zusätzliche Elemente wie Schlauch und Glasdurchführung, welche den Eintritt von Feuchtigkeit zum Trockenmodul beschränken sollen, nicht notwendig. Zusätzlich kann durch die deutlich verringerte Anziehung von Feuchtigkeit durch die Trocknungskammer das Volumen der Trocknungskammer und des in ihr enthaltenen feuchteadsorbierenden Materials im Vergleich zu bisherigen Lösungen verkleinert werden. Durch die Verkleinerung des Trockenmoduls und den Wegfall von Elementen wie Schlauch und Glasdurchführung werden in der vorliegenden Erfindung Platz, Material und Kosten gespart.

An dieser Stelle soll darauf hingewiesen werden, dass die Referenzdruckzuführung von der Öffnung um Gehäuse des Relativdrucksensors hin zur Trocknungskammer so ausgestaltet sein sollte, dass die Diffusion von Feuchtigkeit in den Innenraum des Relativdrucksensors verlangsamt wird. Dies kann beispielsweise durch einen langen, kapillarförmigen Schlauch erfolgen wie bereits aus der DE 10 2010 003 709 A1 bekannt. Aber auch andere Ausgestaltungen der Referenzdruckzuführung sind möglich. So kann die Referenzdruckzuführung auch als Nut in der Wandung eines Bauteils des Relativdrucksensors ausgebildet sein. Der Einsatz des erfindungsgemäßen Trockenmoduls ohne eine lange, gewundene Referenzdruckzuführung wird zu einer schnelleren Sättigung des Trockenmoduls mit Feuchtigkeit führen.

In einer Ausgestaltung ist ein Grundkörper des Trockenmoduls eine Ringkammer, welche entlang einer Längsachse des Grundkörpers eine Durchführung aufweist, welche Anschlussleitungen der Elektronik und die Referenzdruckzuführung zum Messelement führt.

In einer bevorzugten Ausgestaltung ist eine dem Messelement zugewandte Bodenfläche des Behälters als separate Bodeneinheit ausgestaltet, wobei eine Verbindung zwischen der Bodeneinheit und dem Behälter formschlüssig und/oder feuchteundurchlässig ausgestaltet ist. Die Möglichkeit, die Bodeneinheit vom Behälter zu lösen und mit dem Behälter zu verbinden, ermöglicht ein einfaches Befüllen des Behälters mit dem feuchteadsorbierenden Material. Gleichzeitig ermöglicht es eine einfache Herstellung des Trockenmoduls, da der Behälter und die Bodeneinheit aus verschiedenem Material bestehen sollen. Beispielsweise können Behälter und Bodeneinheit mittels additiver Fertigung hergestellt werden.

Vorteilhafterweise ist die Bodeneinheit in den Behälter steckbar. Dies ermöglicht ein einfaches Verschließen des Trockenmoduls. Bei einem Austausch des Trockenmoduls, im Fall der Sättigung des feuchteadsorbierenden Materials mit Feuchtigkeit, kann derselbe Behälter wiederverwendet und lediglich das feuchteadsorbierende Materials gewechselt werden.

In einer weiteren Ausgestaltung ist das Trockenmodul mehrteilig ausgestaltet, derart dass die Ringkammer hinsichtlich eines Längsschnitts in mindestens zwei einzelne Kammern getrennt ist. Bei der Ausgestaltung des Trockenmoduls als eine einzelne Ringkammer müssen die Anschlussleitungen der Elektronik auf umständliche Weise durch die Durchführung des Trockenmoduls geführt werden. Bei der Aufteilung des Trockenmoduls in zwei Kammern können die Anschlussleitungen auf einfache Weise zwischen den beiden Kammern durchgeführt werden und die Kammern anschließend zusammengesetzt werden.

Bevorzugt sind im Falle eines zweiteiligen Trockenmoduls die beiden Kammern symmetrisch ausgestaltet, derart dass das Gesamtvolumen der Ringkammer gleichmäßig auf beide Kammern verteilt ist.

In einer möglichen Ausgestaltung weist der Behälter in einem dem Messelement zugewandten Endbereich eine Vergrößerung des Außendurchmessers auf, wobei das Gehäuse einen Abschnitt mit einer Vergrößerung des Innendurchmessers aufweist, welcher mit dem Abschnitt mit der Vergrößerung des Außendurchmessers des Behälters korrespondiert, wobei die korrespondierenden Abschnitte der Vergrößerung des Außendurchmessers des Behälters und der Vergrößerung des Innendurchmessers des Gehäuses nach Einbringen des Trockenmoduls in das Gehäuse formschlüssig ineinander fügen. Damit wird sichergestellt, dass die Umgebungsluft ausschließlich entlang der Referenzdruckzuführung durch die Durchführung des Trockenmoduls zum Messelement geführt wird.

In einer weiteren Ausgestaltung ist das feuchteundurchlässige Material des Behälters ein Polymer oder ein metallisch beschichtetes Polymer.

In einer zusätzlichen Ausgestaltung ist der feuchtedurchlässige Bereich der Bodeneinheit aus PA oder Gore gefertigt.

Dabei ist es von Vorteil, wenn als feuchteadsorbierendes Material ein Formkörper vorgesehen ist, welcher eine Polymermatrix und Zeolith umfasst. Derartige Formkörper sind beispielsweise aus der DE 10 2010 062 295 A1 oder der DE 10 2011 080 142 A1 bekannt.

Vorteilhafterweise weist die dem Gehäuse zugewandte Außenwandung des Trockenmoduls im Querschnitt eine dem kreisförmigen Grundprofil überlagerte Wellenform auf. Die dem Grundprofil überlagerte Wellenform bewirkt einen Ausgleich von Toleranzen des Durchmessers des Trockenmoduls und des Durchmessers des Gehäuses beim Einbau des Trockenmoduls. Nach Einbau des Trockenmoduls in das Gehäuse sorgt die Wellenform für einen vibrationsfreien Stand des Trockenmoduls im Gehäuse.

Die Erfindung wird anhand der nachfolgenden Figuren Fig. 1-2b näher erläutert. Es zeigt:
Fig. 1 eine schematische Darstellung des erfindungsgemäßen Relativdrucksensors,
Fig. 2a eine mögliche Ausgestaltung des einteiligen Trockenmoduls, und
Fig. 2b eine mögliche Ausgestaltung des zweiteiligen Trockenmoduls.

Die vorliegende Erfindung ist auf eine Vielzahl von Relativdrucksensoren anwendbar, welche auf verschiedenen Messprinzipien beruhen. Relativdrucksensoren dienen zur Bestimmung eines Drucks p1 eines Mediums in Bezug auf einen Atmosphärendruck p2, mit einem Gehäuse, einem Messelement, welches in dem Gehäuse angeordnet ist, wobei eine mit dem Medium in Kontakt stehende Außenfläche des Messelements mit dem zu messenden Druck p1 beaufschlagt ist, einer Referenzdruckzuführung, welche einer Innenfläche des Messelements den Atmosphärendruck p2 in Form von Umgebungsluft zuführt, einer Auswerteeinheit, welche aus einer mit dem Messelement bestimmten Größe den Druck p1 des Mediums bestimmt, und mit mindestens einer in dem Gehäuse angeordneten Trocknungskammer zur Aufnahme von Luftfeuchte aus der durch die Referenzdruckzuführung zugeführten Umgebungsluft. Entsprechende Relativdrucksensoren werden von der Anmelderin beispielsweise unter dem Begriff "Cerabar" und "Ceraphant" hergestellt und vertrieben.

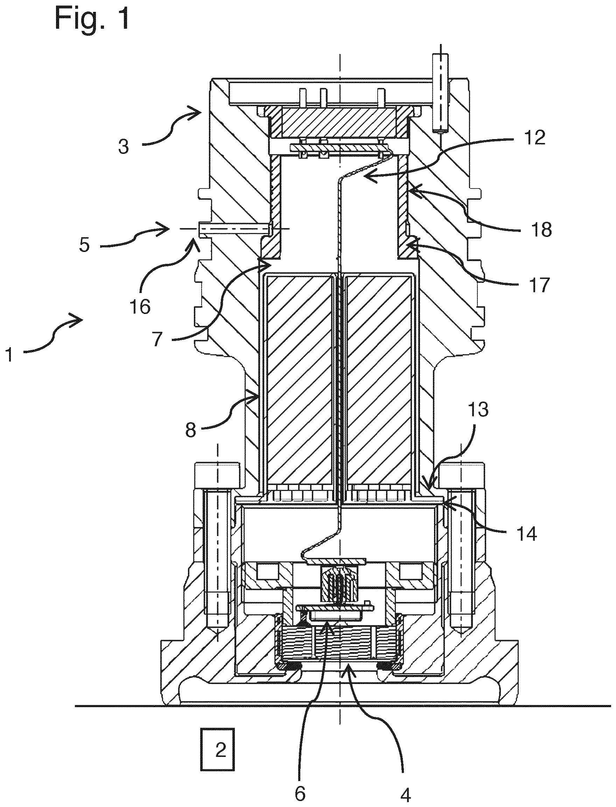

In Fig. 1 ist ein Relativdrucksensor 1 mit dem Gehäuse 3, dem Medium 2 zugewandten Messelement 4, der Referenzdruckzuführung 5 und der Auswerteeinheit 6 dargestellt. Die Referenzdruckzuführung 5 leitet die Umgebungsluft aus der Umgebung des Relativdrucksensors 1 durch eine Öffnung 16 des Relativdrucksensors 1 und entlang einer Nut 18 einer Buchse 17 in den Innenraum des Relativdrucksensors 1. Die Nut 18 dient zur Begrenzung der Geschwindigkeit der Diffusion von Feuchtigkeit in den Relativdrucksensor 1 und ist so ausgestaltet, dass die Referenzdruckzuführung 5 ausschließlich entlang der Nut 18 von der Öffnung 16 in einen Innenraum der Buchse 17 führt. Die Begrenzung der Feuchtigkeitsdiffusion kann jedoch auch durch andere Ausgestaltungen erfüllt sein, wie beispielsweise eine lange Kapillare, die die Öffnung 16 mit dem Innenraum des Relativdrucksensors 1 verbindet.

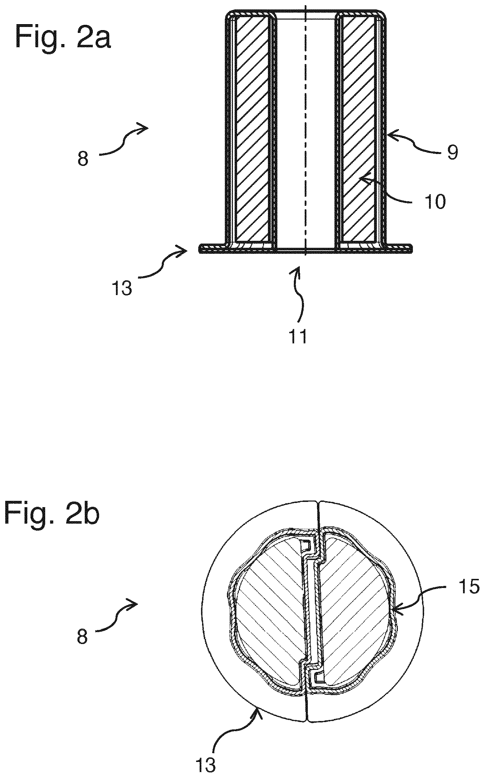

Der Relativdrucksensor weist weiterhin die Trocknungskammer 7 auf, in der das Trockenmodul 8 eingebracht ist. In Fig. 1 ist das Trockenmodul 8 als zweiteilige Ringkammer ausgestaltet, wobei durch die Ringkammer hindurch die Anschlussleitungen der Elektronik 12 sowie die Referenzdruckzuführung 5 verlaufen. Andere Ausgestaltungen des Trockenmoduls 8 sind damit nicht ausgeschlossen; eine weitere mögliche Ausgestaltung ist in Fig. 2a gezeigt. Auf der dem Medium 2 zugewandten Seite des Trockenmoduls 8 weist das Trockenmodul 8 eine Vergrößerung des Außendurchmessers des Behälters 13 auf, welche formschlüssig mit einer Vergrößerung des Innendurchmessers des Gehäuses 14 fügt.

Die Figuren Fig. 2a,b zeigen das erfindungsgemäße Trockenmodul 8, bestehend aus dem Behälter 9, der zumindest teilweisen feuchtedurchlässigen Bodeneinheit 11 und dem feuchteadsorbierenden Material 10, welches ohne Beschränkung der Allgemeinheit als ein Formkörper vorgesehen ist, welcher eine Polymermatrix und Zeolith umfasst. Der Behälter 9 umschließt das feuchteadsorbierende Material 10 komplett und ist mit Ausnahme der Bodeneinheit 11 feuchteundurchlässig ausgestaltet. Die Bodeneinheit 11 kann als Teil des Behälters oder als separate und lösbare Bodeneinheit ausgestaltet sein, wobei die Verbindung zwischen der Bodeneinheit 11 und dem Behälter 9 feuchteundurchlässig und/oder formschlüssig ausgestaltet ist.

In Fig. 2a ist das Trockenmodul 8 als einteilige Ringkammer ausgestaltet und die Bodeneinheit 11 ist in den Behälter 9 gesteckt. Damit sind andere Möglichkeiten der Verbindung der Bodeneinheit 11 mit dem Behälter 9 nicht ausgeschlossen. Das feuchteundurchlässige Material des Behälters ist beispielsweise ein Polymer oder ein metallisch beschichtetes Polymer, wohingegen der feuchtedurchlässige Bereich der Bodeneinheit aus PA oder Gore gefertigt ist. Andere feuchtedurchlässige oder feuchteundurchlässige Materialien sind damit nicht ausgeschlossen. In Richtung des Messelements 4 besitzt das Trockenmodul 8 eine Vergrößerung des Außendurchmessers des Behälters 13, welche sich auch in der Bodeneinheit wiederfindet.

In Fig. 2b ist das Trockenmodul 8 als zweiteiliges Trockenmodul, bestehend aus zwei volumensymmetrischen Kammern, ausgestaltet. Selbstverständlich kann die Zweiteilung des Trockenmoduls auch auf andere Weisen erfolgen. Die Außenwandung 15 des Trockenmoduls 8 weist einen wellenförmigen Querschnitt auf.

### Bezugszeichenliste

- 1: Relativdrucksensor
- 2: Medium
- 3: Gehäuse
- 4: Messelement
- 5: Referenzdruckzuführung
- 6: Auswerteeinheit
- 7: Trocknungskammer
- 8: Trockenmodul
- 9: Behälter
- 10: feuchteadsorbierendes Material
- 11: Bodenfläche
- 12: Anschlussleitungen der Elektronik
- 13: Vergrößerung des Außendurchmessers des Behälters
- 14: Vergrößerung des Innendurchmessers des Gehäuses
- 15: Außenwandung des Trockenmoduls
- 16: Öffnung des Gehäuses
- 17: Buchse
- 18: Nut

## Patentansprüche

1. Relativdrucksensor (1) zur Bestimmung eines Drucks (p1) eines Mediums (2) in Bezug auf einen Atmosphärendruck (p2),
mit einem Gehäuse (3),
mit einem Messelement (4), welches in dem Gehäuse (3) angeordnet ist, wobei eine mit dem Medium (2) in Kontakt stehende Außenfläche des Messelements (4) mit dem zu messenden Druck (p1) beaufschlagt ist,
mit einer Referenzdruckzuführung (5), welche einer Innenfläche des Messelements (4) den Atmosphärendruck (p2) in Form von Umgebungsluft zuführt,
mit einer Auswerteeinheit (6), welche aus einer mit dem Messelement (4) bestimmten Größe den Druck (p1) des Mediums (2) bestimmt,
und mit mindestens einer in dem Gehäuse (3) angeordneten Trocknungskammer (7) zur Aufnahme von Luftfeuchte aus der durch die Referenzdruckzuführung (5) zugeführten Umgebungsluft,
wobei die Trocknungskammer (7) ein Trockenmodul (8) aufweist, welches einen Behälter (9) und ein vom Behälter (9) vollständig umschlossenes feuchteadsorbierendes Material (10) umfasst, **dadurch gekennzeichnet, dass**
eine dem Messelement (4) zugewandte Bodenfläche (11) des Behälters (9) zumindest teilweise feuchtedurchlässig ausgestaltet ist, wobei der Behälter (9) mit Ausnahme der Bodenfläche (11) feuchteundurchlässig ausgestaltet ist, wobei die Auswerteeinheit (6) in der Nähe des Messelements (4) oder zwischen der Bodenfläche (11) des Behälters (9) und dem Messelement (4) angeordnet ist.

2. Relativdrucksensor nach Anspruch 1,
wobei ein Grundkörper des Trockenmoduls (8) eine Ringkammer ist, welche entlang einer Längsachse des Grundkörpers eine Durchführung aufweist, welche Anschlussleitungen der Elektronik (12) und die Referenzdruckzuführung (5) zum Messelement (4) führt.

3. Relativdrucksensor nach mindestens einem der vorherigen Ansprüche, wobei die dem Messelement (4) zugewandte Bodenfläche (11) des Behälters (9) als separate Bodeneinheit (11) ausgestaltet ist, wobei eine Verbindung zwischen der Bodeneinheit (11) und dem Behälter (9) formschlüssig und/oder feuchteundurchlässig ausgestaltet ist.

4. Relativdrucksensor nach Anspruch 3,
wobei die Bodeneinheit (11) in den Behälter (9) steckbar ist.

5. Relativdrucksensor nach mindestens einem der Ansprüche 2-4,
wobei das Trockenmodul (8) mehrteilig ausgestaltet ist, derart dass die Ringkammer hinsichtlich eines Längsschnitts in mindestens zwei einzelne Kammern getrennt ist.

6. Relativdrucksensor nach Anspruch 5,
wobei im Falle eines zweiteiligen Trockenmoduls (8) die beiden Kammern symmetrisch ausgestaltet sind, derart dass das Gesamtvolumen der Ringkammer gleichmäßig auf beide Kammern verteilt ist.

7. Relativdrucksensor nach mindestens einem der vorherigen Ansprüche, wobei der Behälter (9) in einem dem Messelement (4) zugewandten Endbereich eine Vergrößerung des Außendurchmessers (13) aufweist, wobei das Gehäuse (3) einen Abschnitt mit einer Vergrößerung des Innendurchmessers (14) aufweist, welcher mit dem Abschnitt mit der Vergrößerung des Außendurchmessers des Behälters (13) korrespondiert, wobei die korrespondierenden Abschnitte der Vergrößerung des Außendurchmessers des Behälters (13) und der Vergrößerung des Innendurchmessers des Gehäuses (14) nach Einbringen des Trockenmoduls (8) in das Gehäuse (3) formschlüssig ineinander fügen.

8. Relativdrucksensor nach mindestens einem der vorherigen Ansprüche, wobei das feuchteundurchlässige Material (10) des Behälters (9) ein Polymer oder ein metallisch beschichtetes Polymer ist.

9. Relativdrucksensor nach mindestens einem der vorherigen Ansprüche, wobei der feuchtedurchlässige Bereich der Bodeneinheit (11) aus PA oder Gore gefertigt ist.

10. Relativdrucksensor nach mindestens einem der vorherigen Ansprüche, wobei als feuchteadsorbierendes Material (10) ein Formkörper vorgesehen ist, welcher eine Polymermatrix und Zeolith umfasst.

11. Relativdrucksensor nach mindestens einem der vorherigen Ansprüche, wobei die dem Gehäuse (3) zugewandte Außenwandung (15) des Trockenmoduls (8) im Querschnitt eine dem kreisförmigen Grundprofil überlagerte Wellenform aufweist.

## Claims

1. A relative pressure sensor (1) for determining a pressure (p1) of a medium (2) in relation to atmospheric pressure (p2),
having a housing (3),
with a measuring element (4) which is arranged in the housing (3), an outer surface of the measuring element (4) which is in contact with the medium (2) being subjected to the pressure (p1)to be measured,
with a reference pressure supply (5) which supplies the atmospheric pressure (p2) in the form of ambient air to an inner surface of the measuring element (4),
with an evaluation unit (6) which determines the pressure (p1) of the medium (2) from a variable determined with the measuring element (4),
and with at least one drying chamber (7) arranged in the housing (3) to absorb humidity from the ambient air supplied by the reference pressure supply (5),
the drying chamber (7) having a drying module (8) which comprises a container (9) and a moisture-adsorbing material (10) completely enclosed by the container (9),
**characterized in that**
a bottom surface (11) of the container (9) facing the measuring element (4) is designed to be at least partially moisture-permeable, with the container (9) being designed to be moisture-impermeable except for the bottom surface (11) impervious, the evaluation unit (6) being arranged in the vicinity of the measuring element (4) or between the bottom surface (11) of the container (9) and the measuring element (4).

2. relative pressure sensor according to claim 1,
wherein a base body of the dry module (8) is an annular chamber which has a lead-through along a longitudinal axis of the base body, which leads connecting lines of the electronics (12) and the reference pressure supply (5) to the measuring element (4).

3. relative pressure sensor according to at least one of the previous claims,
wherein the bottom surface (11) of the container (9) facing the measuring element (4) is designed as a separate bottom unit (11), wherein a connection between the bottom unit (11) and the container (9) is designed to be form-fitting and/or moisture-impermeable.

4. Relative pressure sensor according to claim 3,
wherein the base unit (11) can be inserted into the container (9).

5. Relative pressure sensor according to at least one of claims 2-4,
wherein the drying module (8) is designed in several parts, such that the ring chamber is divided into at least two individual chambers in terms of a longitudinal section.

6. Relative pressure sensor according to claim 5,
wherein, in the case of a two-part drying module (8), the two chambers are designed symmetrically such that the total volume of the ring chamber is distributed uniformly between the two chambers.

7. relative pressure sensor according to at least one of the previous claims,
wherein the container (9) has an enlargement of the external diameter (13) in an end region facing the measuring element (4), wherein the housing (3) has a section with an enlargement of the internal diameter (14), which corresponds with the section with the enlargement of the external diameter of the , wherein the corresponding sections of the enlargement of the external diameter of the container (13) and the enlargement of the internal diameter of the housing (14) fit into one another in a form-fitting manner after the dry module (8) has been introduced into the housing (3).

8. relative pressure sensor according to at least one of the previous claims,
wherein the moisture-impermeable material (10) of the container (9) is a polymer or a metallically coated polymer.

9. relative pressure sensor according to at least one of the previous claims,
wherein the moisture-permeable region of the base unit (11) is made of PA or Gore.

10. relative pressure sensor according to at least one of the previous claims,
wherein a molded body is provided as the moisture-adsorbing material (10), which comprises a polymer matrix and zeolite.

11. Relative pressure sensor according to at least one of the previous claims,
wherein the outer wall (15) of the drying module (8) facing the housing (3) has a cross-section with a waveform superimposed on the circular basic profile.

## Revendications

1. capteur de pression relative (1) pour déterminer une pression (p1) d'un milieu (2) par rapport à une pression atmosphérique (p2),
avec un boîtier (3),
avec un élément de mesure (4) qui est disposé dans le boîtier (3), une surface extérieure de l'élément de mesure (4) en contact avec le milieu (2) étant soumise à la pression (p1) à mesurer,
avec une amenée de pression de référence (5), qui amène la pression atmosphérique (p2) sous forme d'air ambiant à une surface intérieure de l'élément de mesure (4),
avec une unité d'évaluation (6) qui détermine la pression (p1) du milieu (2) à partir d'une grandeur déterminée avec l'élément de mesure (4),
et avec au moins une chambre de séchage (7) disposée dans le boîtier (3) pour absorber l'humidité de l'air provenant de l'air ambiant amené par l'alimentation en pression de référence (5),
la chambre de séchage (7) présentant un module de séchage (8) qui comprend un récipient (9) et un matériau adsorbant l'humidité (10) entièrement entouré par le récipient (9),
**caractérisé en ce que**
une surface de fond (11) du récipient (9) tournée vers l'élément de mesure (4) est réalisée au moins partiellement perméable à l'humidité, le récipient (9) étant réalisé de manière imperméable à l'humidité à l'exception de la surface de fond (11), l'unité d'évaluation (6) étant disposée à proximité de l'élément de mesure (4) ou entre la surface de fond (11) du récipient (9) et l'élément de mesure (4).

2. capteur de pression relative selon la revendication 1,
dans lequel un corps de base du module de séchage (8) est une chambre annulaire qui présente le long d'un axe longitudinal du corps de base un passage qui conduit les lignes de raccordement de l'électronique (12) et l'alimentation en pression de référence (5) à l'élément de mesure (4).

3. Capteur de pression relative selon au moins l'une des revendications précédentes,
La surface de fond (11) du récipient (9) tournée vers l'élément de mesure (4) étant conçue comme une unité de fond séparée (11), une liaison entre l'unité de fond (11) et le récipient (9) étant conçue par complémentarité de forme et/ou imperméable à l'humidité.

4. Capteur de pression relative selon la revendication 3,
l'unité de fond (11) pouvant être enfichée dans le récipient (9).

5. Capteur de pression relative selon au moins l'une des revendications 2 à 4,
le module de séchage (8) étant conçu en plusieurs parties, de telle sorte que la chambre annulaire soit séparée en au moins deux chambres individuelles en ce qui concerne une section longitudinale.

6. Capteur de pression relative selon la revendication 5,
dans le cas d'un module de séchage (8) en deux parties, les deux chambres sont conçues de manière symétrique, de sorte que le volume total de la chambre annulaire est réparti uniformément sur les deux chambres.

7. Capteur de pression relative selon au moins l'une des revendications précédentes,
le récipient (9) présentant, dans une zone d'extrémité tournée vers l'élément de mesure (4), un agrandissement du diamètre extérieur (13), le boîtier (3) présentant une section avec un agrandissement du diamètre intérieur (14), qui correspond à la section avec l'agrandissement du diamètre extérieur du récipient (13), les sections correspondantes de l'agrandissement du diamètre extérieur du récipient (13) et de l'agrandissement du diamètre intérieur du boîtier (14) s'emboîtant par complémentarité de forme après l'introduction du module de séchage (8) dans le boîtier (3).

8. Capteur de pression relative selon au moins l'une des revendications précédentes,
dans lequel le matériau imperméable à l'humidité (10) du récipient (9) est un polymère ou un polymère revêtu d'un métal.

9. Capteur de pression relative selon au moins une des revendications précédentes,
dans lequel la zone perméable à l'humidité de l'unité de fond (11) est fabriquée en PA ou en Gore.

10. Capteur de pression relative selon au moins l'une des revendications précédentes,
Le matériau adsorbant l'humidité (10) est un corps moulé qui comprend une matrice polymère et de la zéolithe.

11. Capteur de pression relative selon au moins l'une des revendications précédentes,
la paroi extérieure (15) du module de séchage (8), tournée vers le boîtier (3), présentant en section transversale une forme ondulée superposée au profil de base circulaire.
